# EUROPÄISCHE PATENTSCHRIFT

(11) **EP 3 721 534 B1**
(45) Veröffentlichungstag und Bekanntmachung des Hinweises auf die Patenterteilung: **26.06.2024**
(21) Anmeldenummer: 18830172.5
(22) Anmeldetag: 12.12.2018
(51) Int. Cl.: H02K 3/30, H02K 3/50, H02K 3/48, H02K 3/487

(54) **THERMISCH NICHT ISOLIERENDES SCHAUMMATERIAL ZUR MECHANISCHEN VERFESTIGUNG UND PASSIVIERUNG VON KOMPONENTEN ELEKTRISCHER MASCHINEN**
NON-THERMALLY INSULATING FOAM MATERIAL FOR MECHANICAL FIXING AND PASSIVATION OF COMPONENTS OF ELECTRICAL MACHINES
MATÉRIAU MOUSSE THERMIQUE NON ISOLANT DESTINÉ À LA CONSOLIDATION MÉCANIQUE ET À LA PASSIVATION DE COMPOSANTS DES MACHINES ÉLECTRIQUES

(30) Priorität: 30.01.2018 EP 18154174
(43) Veröffentlichungstag der Anmeldung: 14.10.2020
(73) Patentinhaber: Innomotics GmbH, 90441 Nürnberg (DE)
(72) Erfinder: HELLER, Janis, 97616 Bad Neustadt (DE); HUBER, Jürgen, 91058 Erlangen (DE); KATZENBERGER, Tobias, 97631 Bad Königshofen STT Untereßfeld (DE); PLOCHMANN, Bastian, 91413 Neustadt an der Aisch (DE)
(74) Vertreter: Siemens Patent Attorneys
(86) Internationale Anmeldenummer: PCT/EP2018/084546
(87) Internationale Veröffentlichungsnummer: WO 2019/149417

(56) Entgegenhaltungen:
- DE-A1-102004 034 611
- DE-A1-102016 206 121
- DE-C2- 10 117 017
- JP-A- H10 322 959

## Beschreibung

Die folgende Erfindung betrifft ein Verfahren zur Herstellung einer elektrischen Maschine mit einem Wickelkopf und einem Gehäuse. Zudem beschreibt diese Erfindung eine elektrische Maschine mit einem Gehäuse, einem Wickelkopfinhalt des Gehäuses und einem Hartschaumsystem.

Bei elektrischen Maschinen, wie zum Beispiel Elektromotoren, die einen Stator und einen Läufer aufweisen, ist es vorteilhaft eine Kupferwicklung in einem Stator von Niederspannungsmotoren durch ein elektrisch nicht leitfähiges Material mechanisch zu fixieren. Hierbei muss zwischen dem magnetfeldbildenden Teil in der Nut, also den Bereich, der aktiv zur Energieumsetzung beiträgt, und dem Wickelkopf, der keinen Beitrag zur Energieumwandlung beiträgt, unterschieden werden. In der Regel wird eine mechanische Fixierung im Stator durch einen sogenannten Deckschieber und im Wickelkopf durch Bandagierungen der Spulen erreicht. Zudem wird häufig eine Imprägnierung beziehungsweise Tränkung mit einem Reaktivharz verwendet, welches im Anschluss thermisch gehärtet wird. Die Imprägnierung- beziehungsweise Tränkungsprozesse sollen zum einen eine gewisse mechanische Stabilität und eine verbesserte thermische Wärmeabfuhr im Bereich des Wickelkopfs erreichen. Dabei kann jedoch das Problem auftreten, dass solche Imprägnierungsbeziehungsweise Tränkungsvorgänge nicht alle Stellen des Wickelkopfs erfassen beziehungsweise die damit zu erreichende mechanische Stabilität nicht hoch genug ist.

Das Paper "Novel Thermally Conductive Thermoplastic/Ceramic Composite Foams" aus der Zeitschrift Macromolecular Materials and Engineering, 297: 1014-1020 aus dem Jahr 2012 beschreibt multifunktionale Materialien, welche leichtgewichtig sind, thermisch leitfähig jedoch elektrisch isolierend. Dieses Paper behandelt eine neue Schaumstruktur einer Polymermatrix, welche mit keramischen Plättchen gefüllt sind. Dabei wurde eine verbesserte thermische Leitfähigkeit beobachtet.

Die Druckschrift JP H 10 322 959 A beschreibt ein Gehäuse, in dem ein Wickelkopf angeordnet ist. In dieses Gehäuse wird ein Schaummittel eingebracht, welches Luftbläschen enthalten kann. Damit soll vermieden werden, dass mechanische Spannungen erzeugt werden, welche auf das Gehäuse wirken.

Die Offenlegungsschrift DE 10 2016 206 121 A1 beschreibt ein Verfahren zur Herstellung eines für eine elektrische Maschine vorgesehenen Kühlmantels und einen Kühlmantel für eine elektrische Maschine. Der Kühlmantel besteht aus einem Innenteil und einem dieses zumindest teilweise umschließenden Außenteil. Innenteil und Außenteil begrenzen zusammen einen zur Aufnahme eines Kühlfluids ausgebildeten Hohlraum und weisen einander zugewandte Dichtflächen auf. Zur Abdichtung des Hohlraumes ist ein einen Expansionszusatz enthaltenes Dichtmittel vorgesehen, welches durch eine Erwärmung auf eine Expansionstemperatur derart expandiert, dass ein Zwischenraum zwischen den Dichtflächen des Innen- und Außenteiles fluiddicht verschlossen wird. Im Dichtmittel sind magnetische Partikel eingebettet, womit eine induktive Erwärmung ermöglicht wird.

Der Erfindung liegt die Aufgabe zugrunde, eine elektrische Maschine herzustellen, bei der die Wärmeabfuhr vom Wickelkopf zum Gehäuse verbessert ist.

Diese Aufgabe wird gemäß den unabhängigen Patentansprüchen dieser Anmeldung gelöst. Sinnvolle Weiterbildungen ergeben sich aus den Unteransprüchen.

Die vorliegende Erfindung sieht ein Verfahren zur Herstellung einer elektrischen Maschine mit einem Wickelkopf und einem Gehäuse durch Ausführen folgender Verfahrensschritte vor. In einem Schritt a) wird ein Hartschaumsystem bereitgestellt, dass einen Hartschaum in einem ersten flüssigen Zustand aufweist, der in einen zweiten festen Zustand überführbar ist. Man kann den Übergang des Hartschaums vom flüssigen in einen festen Zustand auch als Aushärten bezeichnen. Dieser Übergang beziehungsweise dieses Aushärten des Hartschaums kann sich bei Kontakt mit Umgebungsluft oder mittels Zufuhr thermischer Energie erfolgen. Härtet der Hartschaum bereits bei üblichen Raumtemperaturen bis zu 25°C aus, so muss keine zusätzliche thermische Energie bereitgestellt werden. Wird der Hartschaum erst bei deutlich höheren Temperaturen, wie zum Beispiel bei Temperaturen von mindestens 100°C, vom ersten Zustand in den zweiten Zustand überführt, so kann der Transformationsprozess beziehungsweise der Zeitpunkt des Übergangs vom ersten in den zweiten Zustand bewusst gesteuert werden.

Der Hartschaum weist dabei nicht-metallische Partikel auf und das Hartschaumsystem weist im zweiten System ein größeres Volumen als im ersten Zustand auf. Dabei beträgt die Volumenänderung vom ersten Zustand in den zweiten Zustand wenigstens 5 %. Dies bedeutet, dass der Hartschaum beziehungsweise das Hartschaumsystem keine übliche Vergussmasse sein kann. Vergussmassen härten zwar auch aus, weisen jedoch eine deutlich geringe Volumenänderung als der Hartschaum auf. Insbesondere kann die Volumenänderung vom ersten Zustand in den zweiten Zustand mindestens 10 %, 20 %, 50 % oder sogar mehr als 100 % betragen.

Dieses Hartschaumsystem wird in einen Bereich zwischen dem Wickelkopf und dem Gehäuse der elektrischen Maschine eingebracht. Das Einbringen des Hartschaumsystems kann dabei mittels einer Spachtel oder einer Sprühdose erfolgen, welche das Hartschaumsystem enthält. Im Falle einer Sprühdose würde sich unmittelbar nach dem Einbringen des Hartschaumsystems beziehungsweise nachdem das Hartschaumsystem aus der Sprühflasche entnommen wurde, im ersten Zustand befinden. Handelt es sich um ein Hartschaumsystem, welches bereits bei Raumtemperaturen aushärtet, so beginnt das Hartschaumsystem bereits nach der Entnahme aus der Sprühflasche beziehungsweise einem luftdicht abgeschlossenen Gefäß auszuhärten. Dies ist vor allem bei Hartschäumen der Fall, welche mit der Umgebungsluft beziehungsweise Umgebungsfeuchte reagieren und auf diese Art aushärten. Dies kann sowohl für ein Ein-Komponenten-Hartschaumsystem als auch ein Zwei-Komponenten-Hartschaumsystem zutreffen. Nach dem Einbringen des Hartschaumsystems in einen Bereich zwischen dem Wickelkopf und dem Gehäuse der elektrischen Maschine wird das Hartschaumsystem von dem ersten Zustand in den zweiten Zustand überführt. Zugleich verbindet das Hartschaumsystem im zweiten Zustand zur Wärmeabfuhr den Wickelkopf mit dem Gehäuse. Damit kann der Wickelkopf über das Hartschaumsystem mechanisch mit dem Gehäuse verbunden werden und zugleich zwischen Gehäuse und Wickelkopf eine Wärmebrücke zur verbesserten Wärmeabfuhr bereitgestellt werden. Dies kann dabei helfen, auftretende Wärme im Bereich des Wickelkopfs über das Hartschaumsystem zu dem Gehäuse der elektrischen Maschine zu transportieren. Die thermische Belastung des Wickelkopfes kann so reduziert werden.

Die Erfindung sieht vor, dass dem Hartschaum feste nicht-metallische Partikel zugesetzt werden. Nicht-metallische Partikel wirken als elektrischer Isolator, womit das Hartschaumsystem durch Zugabe nicht-metallischer Partikel ebenfalls elektrisch isolierend ist. Damit kann gewährleistet werden, dass zwischen dem Wickelkopf und dem Gehäuse lediglich eine mechanische beziehungsweise thermische Verbindung geschaffen wird, jedoch nicht eine elektrische Verbindung. Damit kann einem Kurzschluss beziehungsweise einer Beschädigung der elektrischen Maschine vorgebeugt werden. Die nicht-metallischen Partikel sind keine Gase, sondern feste Partikel. Sofern "nicht-metallische Partikel" erwähnt werden, sind stets feste nicht-metallische Partikel gemeint, wenn nicht ausdrücklich etwas anderes offenbart ist.

Häufig angewandt wird die Methode der Imprägnierung beziehungsweise Tränkung des Wickelkopfs mit einem Reaktivharz. Dieses wird im Anschluss thermisch gehärtet. Dabei wird der Stator mit dem Wickelkopf nach der Bandagierung komplett in das Flüssigharzbecken getaucht. Bei einem Austauchen des Wickelkopfs verbleibt das Flüssigharz in den Zwischenräumen und Spalten der Nuten des Wickelkopfs und wir beispielsweise mittels Heißluft Strom und/oder UV-Strahlung thermisch gehärtet.

Imprägniervorgänge sind allerdings hochkomplex, da sehr viele Parameter stimmig miteinander eingestellt werden müssen. So muss gegebenenfalls eine Vorheizung des Stators geschehen, um eine Harzverflüssigung zur besseren Durchströmung der Nuten zu erreichen. Gleichzeitig müssen diese Temperatur und die jeweiligen Prozesszeiten auf eine Gelierzeit des jeweiligen Reaktivharzes abgestimmt sein, sodass es beim Austauchvorgang nicht wieder aus der Statornut herausläuft. Die Einstellungen für den anschließenden Härtungsvorgang (Zeit, Temperatur und Art der Härtung) müssen hinsichtlich des Härtungsverlaufs des Imprägnierharzes ebenfalls optimiert eingestellt werden. Aus wirtschaftlichen Gründen werden häufig mehrere Achshöhen in derselben Anlage (zum Beispiel durch Lauftränkanlage, Strom-Wärme-Anlage, Strom-UV-Anlage) imprägniert, was eine unterschiedliche Temperaturkurve im Objekt und somit einen unterschiedlichen Gelier- und Härtungsverlauf nach sich zieht. Die Parameterauswahl kann somit niemals perfekt auf einen Typ eingestellt werden, was gegebenenfalls zu Qualitäts- und/oder Leistungseinbußen führt, da durch mangelhafte Imprägnierung und Härtung die Qualitäts- und Leistungsanforderungen nicht vollständig erreicht werden können.

Im Fertigungsverlauf sind vor der Imprägnierung mehrere Arbeitsschritte auszuführen. Zum einen müssen die Nuten nach dem Einziehen in die Wicklung des Wickelkopfs mit den sogenannten Deckschiebern verschlossen werden. Zum anderen werden häufig im Wickelkopf Phasentrenner eingelegt und im Anschluss der Wickelkopf mit Bandagen verdichtet und fixiert. In erster Linie ist die Imprägnierung für eine mechanische Fixierung der Wickelung und zum Schutz vor Umwelteinflüssen ausgelegt. Die gewünschte elektrische Isolation wird größtenteils durch einen Drahtlack erreicht. Der Einsatz des Imprägniervorgangs inklusive etwaiger Vorschritte kann somit sich äußerst zeitaufwendig und komplex gestalten. Darüber hinaus kommt es im späteren Betrieb der elektrischen Maschine teilweise zu einer starken Erwärmung von sogenannten Hotspots des Wickelkopfs. Um eine Beschädigung zu verhindern, sollte die Entwärmung im Bereich der Nuten und im Wickelkopf gleichermaßen gegeben sein. Im Bereich des Wickelkopfes ist jedoch zwangsweise ein Luftspalt zwischen den Wicklungen und dem Gehäuse vorhanden. Je nach Konvektionsverhalten der Luft stellt dieser Luftspalt eine Art thermische Isolation dar und damit kann der Wickelkopf nicht optimal gekühlt werden. Das heißt die im Stand der Technik bekannte Art der Wärmeabfuhr im Bereich des Wickelkopfs liefert keine Lösung, wie der Luftspalt zwischen dem Wickelkopf und dem Gehäuse thermisch überbrückt werden kann.

Das in dieser Anmeldung vorgestellte Hartschaumsystem ist in der Regel verarbeitungstechnisch und diskutieren Imprägnierungs- beziehungsweise Tränkungsprozessen deutlich überlegen und meist in der Lage, eine thermische Wärmebrücke zur verbesserten Wärmeabfuhr zwischen dem Wickelkopf und dem Gehäuse bereitzustellen. Dabei ist die so geschaffene Wärmebrücke meist deutlich effizienter als ein einfacher Luftspalt.

Ein thermischer Kontakt des Wickelkopfes zur Gehäuseinnenwand ist durch eine Imprägnierung oder durch ein Imprägnierharz aufgrund deren rheologischen Eigenschaften nur in kleinen Zwischenräumen aufgrund von Kapillar- und Oberflächeneffekten möglich. Eine Kontaktierung, welche einen Luftspalt von mehreren cm überbrückt, ist mittels eines Imprägnierharzes nicht möglich beziehungsweise ein solches System ist der Anmelderin unbekannt.

Die Erfindung sieht vor, dass dem Hartschaumsystem zur Erhöhung der thermischen Leitfähigkeit metallische Partikel homogen als Zusatz beigemischt werden, wobei die Konzentration der beigemischten metallischen Partikel unterhalb der Perkolationsschwelle liegt. Die Perkolationsschwelle beschreibt insbesondere einen Schwellwert bezüglich der Konzentration der metallischen Partikel, ab der das Hartschaumsystem elektrisch leitend wird.

Der Begriff der Perkolationsschwelle stammt aus der Perkolationstheorie. Überschreitet eine Komponente die Perkolationsschwelle, so bildet sie innerhalb eines Festkörpers eine Art Gitter aus. Das sich bildende Gitter wird häufig auch als zusammenhängendes Gebiet oder zusammenhängender Cluster bezeichnet. Die Perkolationstheorie kennt mehrere Arten der Perkolation wie zum Beispiel die Punktperkolation oder die Kantenperkolation. Beim Erreichen der Perkolationsschwelle kann der Hartschaum schlagartig seine elektrischen Eigenschaften verändern. Er ist vor allem unterhalb der Perkolationsschwelle elektrisch isolierend, oberhalb der Perkolationsschwelle kann das Hartschaumsystem elektrisch leitend sein.

Dabei bezieht sich die Konzentration der beigemischten metallischen Partikel insbesondere auf eine Volumenkonzentration der beigemischten Partikel. Die Volumenkonzentration der beigemischten metallischen Partikel bezieht sich in dieser Anmeldung auf das Hartschaumsystem im ersten Zustand. Das heißt die Volumenkonzentration bezieht sich auf jenes Volumen, welches das Hartschaumsystem im flüssigen, also im ersten Zustand aufweist. Die Perkolationsschwelle bezieht sich insbesondere auf das Hartschaumsystem im zweiten Zustand.

Je nach Anwendungsfall kann sich jedoch die Perkolationsschwelle auch auf den ersten Zustand des Hartschaumsystems beziehen. Dies bedeutet, dass bei bekannter Volumenausdehnung die Konzentration der beigemischten, metallischen Partikel bezüglich des ersten Zustands des Hartschaumsystems noch oberhalb der Perkolationsschwelle liegen kann. Bei der Umwandlung des Hartschaumsystems vom ersten in den zweiten Zustand dehnt sich das Hartschaumsystem aus. Dadurch sinkt entsprechend die Konzentration, insbesondere die Volumenkonzentration, der beigemischten metallischen Partikel. Nach der Volumenausdehnung liegt dann die volumetrische Konzentration der beigemischten metallischen Partikel im Hartschaumsystem des zweiten Zustands unterhalb der Perkolationsschwelle. Die Konzentration der beigemischten metallischen Partikel wird also stets so gewählt, dass zumindest im Hartschaumsystem des zweiten Zustands die Perkolationsschwelle nicht überschritten wird. Liegt das Hartschaumsystem im ersten Zustand also flüssig vor, so kann gegebenenfalls die Konzentration der beigemischten metallischen Partikel oberhalb der Perkolationsschwelle bezüglich des Hartschaumsystems im ersten Zustand sein. Durch die Zugabe metallischer Partikel kann die thermische Leitfähigkeit des Hartschaums weiter gesteigert werden. Zugleich wird durch die Begrenzung der Konzentration der beigemischten metallischen Partikel bewirkt, dass das Hartschaumsystem im zweiten Zustand elektrisch isolierend bleibt.

In Bezug auf die metallischen Partikel kann das Hartschaumsystem im zweiten Zustand auch als unterperkolär bezeichnet werden. Dies bedeutet, dass im zweiten Zustand des Hartschaumsystems sich keine zusammenhängende Gebiete von metallischen Partikeln ergeben können. Somit ist gewährleistet, dass das Hartschaumsystem trotz der beigemischten metallischen Partikel wie ein Isolator wirkt. Jedoch kann vorteilhaft die thermische Leitfähigkeit des Hartschaumsystems dadurch erhöht werden.

Eine weitere Variante dieser Erfindung sieht vor, dass für ein Herstellen des Hartschaums zwei verschiedene Komponenten vermischt werden. Solche Hartschäume sind ebenfalls als Zwei-Komponenten-Hartschäume bekannt. Insbesondere kann die Vermischung der verschiedenen Komponenten mittels eines Mischrohres erfolgen. Anstelle zwei Komponenten zu vermischen können insbesondere auch weitere zusätzliche Komponenten vermischt werden. Das heißt, es ist auch möglich, mehr als zwei verschiedene Komponenten miteinander zu vermischen, um einen Hartschaum herzustellen. Damit kann der Hartschaum gegebenenfalls weiter modifiziert werden. Da in dieser Variante der Erfindung der Hartschaum durch das Vermischen mehrerer Komponenten hergestellt wird, kann insbesondere der Prozess des Aushärtens gesteuert werden. Härtet ein so hergestellter Hartschaum bereits bei Raumtemperaturen von bis zu 25°C aus, so beginnt der Prozess des Aushärtens erst nachdem Vermischen der Komponenten und nicht bereits vorher. Dies kann prozesstechnisch vorteilhaft sein.

Eine vorteilhafte weitere Variante sieht vor, dass vor dem Vermischen der beiden Komponenten des Hartschaums die Partikel beiden Komponenten beigemischt werden. Um eine möglichst homogene Beimischung der zugesetzten Partikel zu erreichen, werden die Partikel bei Mehr-Komponenten-Hartschaumsystemen den jeweiligen Komponenten zuvor beigemischt. Bei einem Zwei-Komponenten-Hartschaumsystem werden die Partikel insbesondere die beiden Komponenten zu jeweils 50 % beigemischt. So kann eine möglichst homogene Mischung beziehungsweise Verteilung der Partikel im Hartschaum beziehungsweise im Hartschaumsystem erreicht werden.

Eine weitere Variante dieser Erfindung sieht vor, dass zum Bereitstellen des Hartschaumsystems ein Ein-Komponenten-Hartschaum verwendet wird, der nur eine Komponente aufweist und der Ein-Komponenten-Hartschaum mittels einer chemischen Reaktion und/oder thermischen Behandlung von dem ersten Zustand in den zweiten Zustand überführt wird. Ein Ein-Komponenten-Hartschaum kann je nach Anwendungsfall in der Handhabung einfacher sein. Er liegt vorzugsweise in einer luftdicht verschlossenen Verpackung vor. Handelt es sich dabei um einen Hartschaum, der bereits bei Raumtemperaturen aushärtet, so beginnt dieser Hartschaum nach der Entnahme aus der luftdichten Verpackung auszuhärten. Das heißt, nachdem der Ein-Komponenten-Hartschaum aus der Verpackung entnommen wurde, beginnt er sich in diesem Beispiel von dem ersten Zustand in den zweiten Zustand umzuwandeln.

Härtet jedoch dieser Ein-Komponenten-Hartschaum erst bei höheren Temperaturen jenseits einer üblichen Raumtemperatur aus, so muss zur Transformation des Hartschaums in den zweiten Zustand thermische Energie zugeführt werden. Dadurch steigt zwar der Energieaufwand, jedoch kann der Zeitpunkt des Übergangs des Hartschaumsystems von dem ersten in den zweiten Zustand gezielt gesteuert werden. So kann beispielsweise in einem ersten Arbeitsschritt der Ein-Komponenten-Hartschaum im Bereich des Wickelkopfes eingebracht beziehungsweise aufgetragen werden und erst später der Prozess des Aushärtens durch Zufuhr thermischer Energie vollzogen werden. Diese Variante der vorliegenden Erfindung kann analog bei Zwei- oder Mehr-Komponenten-Hartschaumsystemen zum Einsatz kommen.

Die vorliegende Erfindung stellt auch eine elektrische Maschine mit einem Gehäuse, einem Wickelkopf innerhalb des Gehäuses und einem Hartschaumsystem bereit. Das Hartschaumsystem weist einen Hartschaum in einem ersten flüssigen Zustand auf, der in einen zweiten festen Zustand überführbar ist. Dabei weist der Hartschaum nicht-metallische Partikel auf. Die elektrische Maschine zeichnet sich dadurch aus, dass das Hartschaumsystem im zweiten Zustand ein größeres Volumen als im ersten Zustand aufweist, und die Volumenänderung vom ersten Zustand in den zweiten Zustand wenigstens 5 % beträgt. Ferner kontaktiert das Hartschaumsystem den Wickelkopf und zugleich das Gehäuse der elektrischen Maschine, wobei das Hartschaumsystem elektrisch isolierend ist. Die genannten Beispiele und Vorteile zu den bereits erwähnten Varianten der Erfindung gelten sinngemäß für diesen Vorrichtungsanspruch.

Eine weitere Variante dieser Erfindung sieht eine elektrische Maschine vor, wobei der Wickelkopf in einzelne Leiterbündel aufgefächert ist und der Wickelkopf durch das Hartschaumsystem zumindest teilweise umschlossen ist. In dieser Variante der Erfindung wird die mechanisch stabilisierende Wirkung des Hartschaumsystems vorteilhaft genutzt. Der Wickelkopf kann in einzelne Leiterbündel aufgefächert werden, was eine Kontaktoberfläche zwischen dem Wickelkopf und dem Hartschaumsystem erhöhen kann. So kann die thermische Leitfähigkeit im Bereich des Wickelkopfes zusätzlich erhöht werden. Durch das Auffächern in einzelne Leiterbündel kann ein effektiverer Wärmeübergang vom Wickelkopf zu dem Hartschaumsystem erfolgen. Da der Wickelkopf innerhalb des Hartschaumsystems eingebettet ist, ist in dieser Variante der Erfindung ebenfalls hinreichend mechanische Stabilität gewährleistet.

Eine weitere Variante der Erfindung sieht eine elektrische Maschine vor, wobei die elektrische Maschine ein Blechpaket mit einer Nut aufweist, wodurch ein Leiterbündel geführt ist und das Hartschaumsystem den Wickelkopf und den an dem Wickelkopf angrenzenden Teil der Nut umfasst sowie das Gehäuse der elektrischen Maschine kontaktiert. Im Bereich des Blechpakets ist üblicherweise eine gute thermische Leitfähigkeit gegeben. Dies liegt insbesondere daran, dass viele Metalle eine hohe Wärmeleitfähigkeit aufweisen. So besitzt das Metall Kupfer eine Wärmeleitfähigkeit von etwa 400 W/(m K). Aluminium hat beispielsweise eine Wärmeleitfähigkeit von etwa 200 W/(m K). Auch reines Gold mit einer Wärmeleitfähigkeit von etwa 300 W/(m K) wäre prinzipiell geeignet, um in dem Bereich des Blechpakets eine gute thermische Leitfähigkeit bereitstellen zu können. Davon wird in der Regel aus wirtschaftlichen Gründen jedoch abgesehen.

Die Nut befindet sich vorzugsweise in einem Übergangsbereich zwischen dem Blechpaket und dem Wickelkopf der elektrischen Maschine. Um ausgehend von dem Blechpaket eine gute Wärmeabfuhr in Richtung des Gehäuses zu ermöglichen, umfasst das Hartschaumsystem in dieser Variante der Erfindung den Wickelkopf und den Teil der Nut, der an den Wickelkopf angrenzt. Sogleich erstreckt sich in diesem Beispiel das Hartschaumsystem vom Wickelkopf weiter in Richtung des Gehäuses und kontaktiert es. Im Idealfall ergibt das Hartschaumsystem im zweiten Zustand ein einteiliges Gebilde, welches den an dem Wickelkopf angrenzenden Teil der Nut umfasst, den Wickelkopf einschließt sowie einen mechanischen Kontakt zu dem Gehäuse der elektrischen Maschine herstellt. So kann ermöglicht werden, dass bereits ab der Nut in Richtung Gehäuse eine verbesserte Wärmeabfuhr erfolgen kann. Damit kann die Wärmeabfuhr der elektrischen Maschine insgesamt gesteigert werden. Dies kann dabei helfen, einer Überhitzung oder Beschädigung der elektrischen Maschine vorzubeugen. Unter Umständen kann es sogar möglich sein, die Maschine noch effektiver zu nutzen, da aufgrund des Hartschaumsystems eine deutlich verbesserte Wärmeabfuhr möglich ist. Insbesondere könnte eine zumindest zweitweise Übertaktung der elektrischen Maschine möglich werden, ohne dabei eine thermische Beschädigung der elektrischen Maschine riskieren zu müssen.

Eine besonders vorteilhafte weitere Variante dieser Erfindung sieht eine elektrische Maschine vor, wobei der Hartschaum metallische Partikel aufweist, welche homogen beigemischt sind und die Konzentration der beigemischten metallischen Partikel unterhalb der Perkolationsschwelle liegt. Die Konzentration der beigemischten metallischen Partikel bezieht sich in diesem Fall wie bereits in einer zuvor erwähnten Variante dieser Erfindung auf eine volumetrische Konzentration. Die Konzentration beziehungsweise Volumenkonzentration der metallischen Partikel überschreitet dabei idealerweise niemals die Perkolationsschwelle des Hartschaumsystems im zweiten Zustand. Jedoch kann die Konzentration der metallischen Partikel die Perkolationsschwelle des Hartschaumsystems im ersten Zustand noch überschreiten. Vorzugsweise liegt die Konzentration beziehungsweise Volumenkonzentration der metallischen beigemischten Partikel auch im ersten Zustand des Hartschaumsystems bereits unterhalb der Perkolationsschwelle. Dies bedeutet, dass das Hartschaumsystem Patentansprüche bereits im ersten Zustand elektrisch isolierend wäre. Wichtig jedoch ist, dass spätestens das Hartschaumsystem im zweiten Zustand elektrisch isolierend ist. Dies wird durch die Begrenzung der Konzentration der beigemischten metallischen Partikel auf einen Konzentrationswert unterhalb der Perkolationsschwelle bezüglich des zweiten Zustands des Hartschaumsystems gewährleistet. Die genannten Vorteile und Ausführungen der vorgenannten Varianten dieser Erfindung gelten sinngemäß für diese Ausführungsform der Erfindung.

Eine weitere Variante dieser Erfindung sieht eine elektrische Maschine vor, wobei die metallischen Partikel jeweils von nicht-metallischen Partikeln umschlossen sind. Vorzugsweise weisen die metallischen Partikel Kupfer auf und die nicht-metallischen Partikel Bornitrid. In dieser Variante der Erfindung muss hinsichtlich der Konzentration der metallischen Partikel keine Rücksicht auf die Perkolationsschwelle genommen werden. Da in dieser Variante der Erfindung alle metallischen Partikel jeweils vollständig von nicht-metallischen Partikeln umschlossen sind, können die metallischen Partikel sich nicht zu einem Leitpfad innerhalb des Hartschaumsystems anordnen.

In vielen Fällen kann jedoch die Zugabe von Partikel aufgrund der verändernden rheologischen Eigenschaften nicht beliebig gesteigert werden. Der Hartschaum wird mit zunehmender Zugabe metallischer beziehungsweise nicht-metallischer Partikel tendenziell zäher. Das heißt, die Viskosität des Hartschaums beziehungsweise des Hartschaumsystems im ersten Zustand nimmt tendenziell mit steigender Konzentration beigemischter Partikel zu. Dies kann das Vermischen der Partikel mit dem Hartschaum beziehungsweise die weitere Verarbeitung beeinträchtigen.

In dieser Variante der Erfindung ist jedoch darauf zu achten, dass das Umschließen der metallischen Partikel durch die nicht-metallischen Partikel zuverlässig gegeben ist. Wird beispielsweise Kupfer von Bornitrid umgeben, so könnte ein eventuelles Abplatzen von Bornitridpartikeln im späteren Verlauf problematisch werden. Wäre die Konzentration der metallischen Partikel höher als die der Perkolationsschwelle, so könnte das Hartschaumsystem durch beschädigte Bornitridpartikel elektrisch leitend werden. Das Hartschaumsystem wäre demnach nicht länger elektrisch isolierend, was in dieser Erfindung nicht erwünscht ist. Aus diesem Grund kann es vorteilhaft sein, die Konzentration der beigemischten metallischen Partikel stets unterhalb der Perkolationsschwelle zu halten.

Ein Beispiel, das nicht zur Erfindung gehört, sieht eine elektrische Maschine vor, wobei dem Hartschaumsystem ausschließlich feste nicht-metallische Partikel zugesetzt sind. Das Ermitteln der Perkolationsschwelle für das Hartschaumsystem im ersten oder zweiten Zustand kann schwierig sein und oft kann nur ein Bereich angegeben werden, indem die Perkolationsschwelle liegt. Um diese Unsicherheit zu eliminieren, sieht dieses Beispiel vor, dass ausschließlich feste nicht-metallische Partikel dem Hartschaumsystem beigemischt werden, das heißt das Hartschaumsystem weist in dieser Variante, welche nicht zur Erfindung gehört, keine metallischen Partikel wie Kupfer, Aluminium oder Eisen auf. Ein Hartschaumsystem das beispielsweise neben dem Hartschaum ausschließlich Bornitrid enthält, wäre ein Beispiel für diese Variante, welche nicht zur Erfindung gehört. So kann es innerhalb der elektrischen Maschine gewährleistet werden, dass das Hartschaumsystem elektrisch isolierend ist und bleibt.

Die vorliegende Erfindung wird nun anhand der beigefügten Zeichnungen näher erläutert. Dabei zeigen:
- FIG.1:: ein Wickelkopf, der innerhalb eines Gehäuses angeordnet ist;
- FIG.2:: ein Hartschaumsystem mit vergrößerter Darstellung um den Bereich einer zufällig ausgewählten Pore;
- FIG.3:: mehrere experimentell bestimmte Wärmeleitfähigkeiten beziehungsweise Expansionsfaktoren eines Hartschaumsystems bei unterschiedlicher Volumenkonzentration der beigesetzen Partikel;
- FIG.4:: ein beispielhaftes Misch-Gerät zum Vermischen mehrere Komponenten des Hartschaumsystems;
- FIG.5:: eine schematische Zeichnung einer elektrischen Maschine mit Wickelkopf in mehreren Stadien des Verfahrens;
- FIG.6:: prinzipielle Darstellung der elektrischen Maschine mit Wickelkopf und Blechpaket;
- FIG.7:: schematische Darstellung einer elektrischen Maschine mit Hartschaumsystem und einem aufgefächerten Wickelkopf.

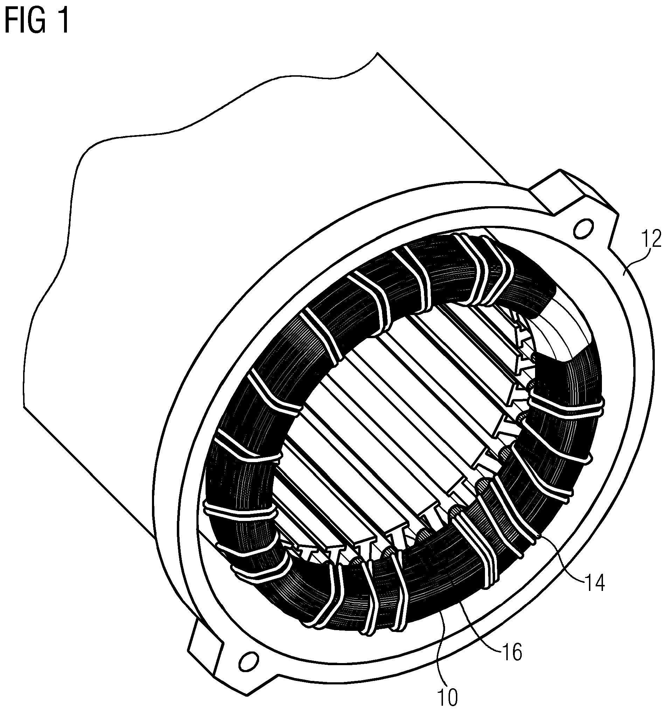

FIG 1 zeigt beispielhaft einen Wickelkopf 10 der innerhalb eines Gehäuses 12 angeordnet ist. Der Wickelkopf 10 ist mit Befestigungsmitteln 14 fixiert. Der Wickelkopf 10 weist mehrere Leiterbündel auf, welche in eine Nut 16 münden. In diesem Beispiel soll der Wickelkopf 10 später den Stator einer elektrischen Maschine 50 bilden. Die elektrische Maschine 50 kann beispielsweise als rotierender Generator oder als ein Linearmotor ausgebildet sein. Die Darstellung in FIG 1 lässt allerdings die Vermutung zu, dass innerhalb des Gehäuses beziehungsweise innerhalb des Wickelkopfes 10 andere Komponenten der elektrischen Maschine 50 zum Rotieren gebracht werden sollen. Soll die elektrische Maschine 50 als Generator ausgebildet werden, so wird bevorzugt kinetische Energie beziehungsweise Rotationsenergie in elektrische Energie umgewandelt. Da solche Energieumwandlungen von Natur aus niemals perfekt sind, treten dabei Energieverluste in Form von Wärme auf. Dies liegt daran, dass der Wirkungsgrad bei der Energieumwandlung in der Praxis stets kleiner 1 ist.

Die FIG 1 zeigt deutlich, dass im Bereich zwischen dem Wickelkopf 10 und dem Gehäuse 12 ein leerer Raum, ein Luftspalt vorhanden ist. Stehende Luft hat eine sehr schlechte thermische Leitfähigkeit und wirkt meist wie ein thermischer Isolator. Bei der Isolation von heißen Rohrleitungen und Gebäuden ist eine thermische Isolation erwünscht, hier allerdings soll der Wickelkopf 10 mit dem Gehäuse 12 thermisch gut verbunden sein. Dabei ist es erforderlich, dass die thermische Isolation keine elektrische Verbindung herstellt, da sonst die elektrische Maschine 50 im Betrieb beschädigt werden würde. Luft hat eine thermische Leitfähigkeit von etwa 0,03 W/(m K), wenn keine zusätzliche Konvektion vorliegt. Ein Hartschaumsystem 20 kann eine thermische Wärmeleitfähigkeit TC von etwa 0,15 W/(m K) erreichen. Damit bietet sich das Hartschaumsystem 20 als Wärmeleiter zwischen dem Wickelkopf 10 und dem Gehäuse 12 an und sorgt zugleich dafür, dass zwischen diesen beiden Komponenten der elektrischen Maschine 50 keine elektrische Verbindung zustande kommt.

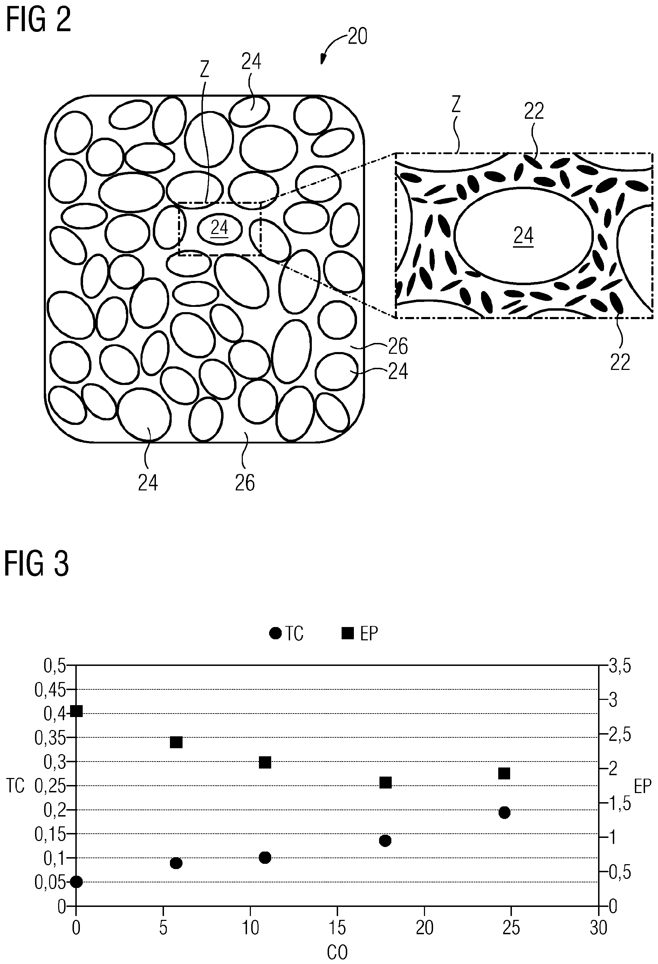

Die FIG 2 zeigt eine schematische Prinzipskizze des Hartschaumsystems 20. Das Hartschaumsystem 20 befindet sich im Beispiel der FIG 2 im zweiten Zustand. Es liegt also in fester Form vor. Innerhalb des Hartschaumsystems 20 finden sich diverse Lufteinschlüsse, welche auch Poren 24 genannt werden. Beim Aushärten beziehungsweise bei der Transformation eines Hartschaums 26 von dem ersten in den zweiten Zustand reichert sich der Hartschaum 26 mit Luft an. Durch einen sogenannten Schäumungsprozess entzieht der Hartschaum 26 der Umgebung Luft beziehungsweise Feuchtigkeit und lagert diese innerhalb des Hartschaumsystems 20 an. Dadurch vergrößert sich das Volumen des Hartschaumsystems 20 beim Übergang von dem ersten Zustand in den zweiten Zustand. Im ersten Zustand würde das Hartschaumsystem 20 keine Poren 24, sondern lediglich den Hartschaum 26 sowie etwaige zugesetzte Partikel enthalten.

Ein Ausschnitt Z zeigt beispielhaft eine Umgebung einer zufällig ausgewählten Pore 24. Zwischen den Poren 24 in dem Hartschaumsystem 20 sind nicht-metallische Partikel 22 angeordnet. Diese nicht-metallischen Partikel 22 sind vorzugsweise Bornitridpartikel. Vorzugsweise ist die Form der Bornitridpartikel plättchenförmig, jedoch kann die jeweilige Form der Bornitridpartikel sich unterscheiden. Das heißt die Bornitridpartikel können kugelförmig, ellipsoidförmig, zylinderförmig, ellipsenförmig, würfelförmig, pyramidenförmig oder eine Mischung der vorgenannten Formen sein. Durch die Zugabe der nicht-metallischen Partikel 22 kann die thermische Leitfähigkeit innerhalb des Hartschaums 26 erhöht werden, was ebenfalls die thermische Leitfähigkeit des Hartschaumsystems 20 insgesamt erhöhen kann. Vorzugsweise werden für die nicht-metallischen Partikel 22 solche verwendet, welche eine deutlich höhere thermische Leitfähigkeit, als Luft aufweisen. Hexagonales Bornitrid weist beispielsweise eine thermische Leitfähigkeit von etwa 300 W/(m K) auf. Durch die beigesetzten Bornitridpartikel kann die von dem Wickelkopf 10 auftretende Abwärme effektiver und besser durch das Hartschaumsystem 20 transportiert werden. Die thermische Leitfähigkeit des Hartschaumsystems 20 kann durch Variation verschiedener Parameter beeinflusst werden. Zum einen können unterschiedliche Hartschäume zum Einsatz kommen.

Im Rahmen mehrerer Versuchsreihen hat sich ein Zwei-Komponenten-PU-Hartschaum-System aus Polyol und Isocyanat als vorteilhaft erwiesen. Ein weiterer Parameter, der die thermische Leitfähigkeit des Hartschaumsystems 20 beeinflusst, ist die Volumenkonzentration der beigesetzten nicht-metallischen Partikel 22. In FIG 3 sind mehrere Werte zur Wärmeleitfähigkeit TC sowie zu einem Expansionsfaktor EP gezeigt. Die Werte für die Wärmeleitfähigkeit TC sind in FIG 3 in Form von Kreisen gekennzeichnet. Die Punkte bezüglich des Expansionsfaktor EP sind in Form von Quadraten dargestellt. Die x-Achse in FIG 3 zeigt unterschiedliche volumetrische Konzentrationsangaben CO. Demnach zeigt die FIG 3 die Daten zu mehreren Hartschaumsystemen 20 mit einer Volumenkonzentration nicht-metallischer Partikel 22, die in einen Bereich zwischen 0 und 25 % liegen. Die linke Y-Achse in FIG 3 stellt die Wärmeleitfähigkeit TC dar. Die rechte Y-Achse in FIG 3 stellt einen Expansionsfaktor EP dar. Der Expansionsfaktor EP ist im Rahmen dieser Erfindung als das Verhältnis zwischen den beiden Volumina des Hartschaumsystems vom zweiten Zustand zu dem ersten Zustand zu verstehen. Das heißt, bei einem Expansionsfaktor von 2 hat sich das Volumen des Hartschaumsystems 20 beim Übergang von dem ersten Zustand zu dem zweiten Zustand verdoppelt. Die volumetrischen Konzentrationsangaben CO der x-Achse in FIG 3 stellen volumetrische Konzentrationsangaben dar. Diese volumetrischen Konzentrationsangaben beziehen sich dabei auf das Hartschaumsystem im ersten Zustand.

Wenn zum Beispiel das Hartschaumsystem 90 ml Hartschaum und 10 ml Bornitrid aufweist, so stellt dies eine volumetrische Konzentration von 10 % dar. Wird der Hartschaum 26 in den zweiten Zustand übergeführt, so reichert sich im Hartschaum 26 Luft an, wodurch sich der Hartschaum 26 zum dem Hartschaumsystem 20 ausdehnt. Würde in diesem Beispiel der Hartschaum sich zu einem Hartschaumsystem von 200 ml Volumen ausdehnen, so entspräche die Volumenkonzentration der zugesetzten Bornitridpartikel dann nur noch 5 %. Von daher ist es wichtig, die volumetrische Konzentration entweder auf den ersten oder auf den zweiten Zustand des Hartschaumsystems 20 zu beziehen. Die im Rahmen dieser Erfindung genannten Konzentrationswerte sind Volumenkonzentrationswerte, welche sich auf das Hartschaumsystem im ersten Zustand beziehen. Das Hartschaumsystem 20 im ersten Zustand liegt in flüssiger Form vor, beinhaltetet jedoch vorzugsweise bereits zugesetzte Partikel. Die bewusst zugesetzten Partikel weisen dabei idealerweise jedoch keine Luftmoleküle auf. Das bedeutet, dass mit der Zugabe von Partikeln feste Stoffe gemeint sind, die nicht gasförmig sind.

Aus der FIG 3 kann man entnehmen, dass ohne den Zusatz von Bornitrid, also bei einer Volumenkonzentration von 0 % die thermische Leitfähigkeit des Hartschaumsystems bei etwa 0,05 W/(m K) liegt. Mit steigender Volumenkonzentration an Bornitrid steigt auch die Wärmeleitfähigkeit TC an. Bei etwa 25 Vol.-% beträgt die Wärmeleitfähigkeit TC in etwa 0,2 W/(m K). Durch die Zugabe von Bornitrid reduziert sich tendenziell der Expansionsfaktor EP mit steigender Volumenkonzentration. Dies liegt vornehmlich daran, dass das Bornitrid direkt keiner Expansion unterworfen ist.

In anderen Versuchen, welche in FIG 3 nicht dargestellt sind, konnte gezeigt werden, dass durch die Zugabe von Kupferpartikel die Wärmeleitfähigkeit TC auf bis zu 1,15 W/(m K) gesteigert werden konnte. Um jedoch eine elektrische Isolation sicher zu gewährleisten, werden häufig zunächst Bornitrid beziehungsweise nicht-metallische Partikel 22 als Zusatz beigemischt. Durch die eingebrachten Bornitridpartikel erhöht sich die Wärmeleitfähigkeit TC des Hartschaumsystems 20, da sich die nicht-metallischen Partikel 22 vorzugsweise an den Porenwänden anreichern und somit den Hartschaum 26 thermisch leitfähiger machen. Es entstehen quasi thermisch leitfähige Brücken, durch das Poren-Netzwerk des Hartschaumsystems, was letztendlich zu einem mittleren Mischungswiderstand und somit zu einer thermischen Leitfähigkeit von 0,15 bis 0,2 W/(m K) führt.

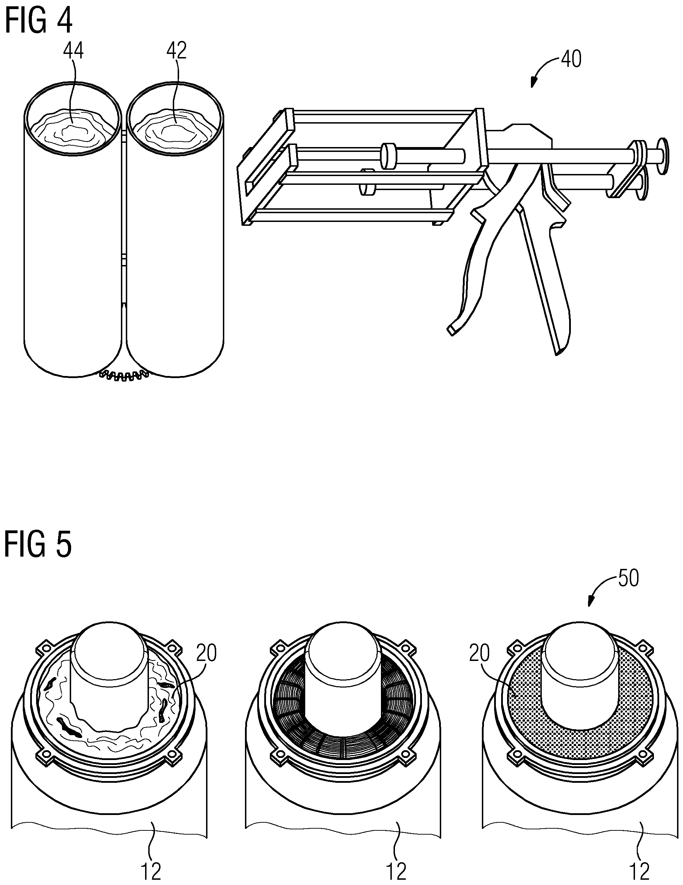

In FIG 4 ist beispielhaft eine Mischpistole 40 gezeigt. Mit Hilfe dieser Mischpistole 40 können die unterschiedlichen Komponenten des Hartschaums 26 vermischt werden. Der linke Bereich in FIG 4 zeigt beispielhaft zwei zylinderförmige Gefäße, die jeweils eine Komponente zum Herstellen des Hartschaums 26 beinhalten. Die erste Komponente 42 befindet sich im linken Gefäß, die zweite Komponente 44 befindet sich im rechten Gefäß. Diese beiden Komponenten 42 und 44 können in einem in FIG 4 nicht dargestellten Mischrohr zu dem Hartschaum 26 vermischt werden. Mit Hilfe der Kolben der Mischpistole 40, können die beiden Komponenten 42 und 44 in das nicht dargestellte Mischrohr gedrückt werden. FIG 4 zeigt dabei nur beispielhaft eine Möglichkeit, wie der Hartschaum 26 beziehungsweise das Hartschaumsystem 20 bereitgestellt werden können.

In FIG 5 ist gezeigt, wie der Hartschaum 26 eingesetzt wird. Die mittlere Darstellung in FIG 5 zeigt die elektrische Maschine 50 mit dem Gehäuse 12 sowie dem darin angeordneten Wickelkopf 10. Komponenten, welche durch das Hartschaumsystem 20 nicht erfasst werden sollten, wurden entsprechend zuvor abgedeckt. Die linke Darstellung in FIG 5 zeigt das Hartschaumsystem 20, welches im Bereich des Wickelkopfes 10 eingebracht wurde. Das Hartschaumsystem 20 in der linken Darstellung befindet sich noch im ersten Zustand. Da im Beispiel von FIG 5 ein Hartschaumsystem eingesetzt wurde, welches bereits bei Raumtemperatur aushärtet, ist keine Zufuhr von zusätzlicher thermischer Energie nötig. Im rechten Bild von FIG 5 ist die elektrische Maschine 50 gezeigt, nachdem das Hartschaumsystem 20 ausgehärtet ist. Hier hat das Hartschaumsystem 20 den zweiten Zustand eingenommen. Es bildet eine feste, homogene Masse, welche den Wickelkopf 10 umschließt und das Gehäuse 12 kontaktiert. Im rechten Bild von FIG 5 ist der Wickelkopf 10 aufgrund des erstarrten festen Hartschaumsystems 20 nicht mehr zu sehen. Da das Hartschaumsystem 20 sich zuvor ausgedehnt hat, übt es auf das Gehäuse 12 einen gewissen Druck aus. Daher kann das Hartschaumsystem 20 neben der Abfuhr von Wärmeenergie auch zur mechanischen Stabilisierung des Gehäuses 12 beziehungsweise der elektrischen Maschine 50 eingesetzt werden.

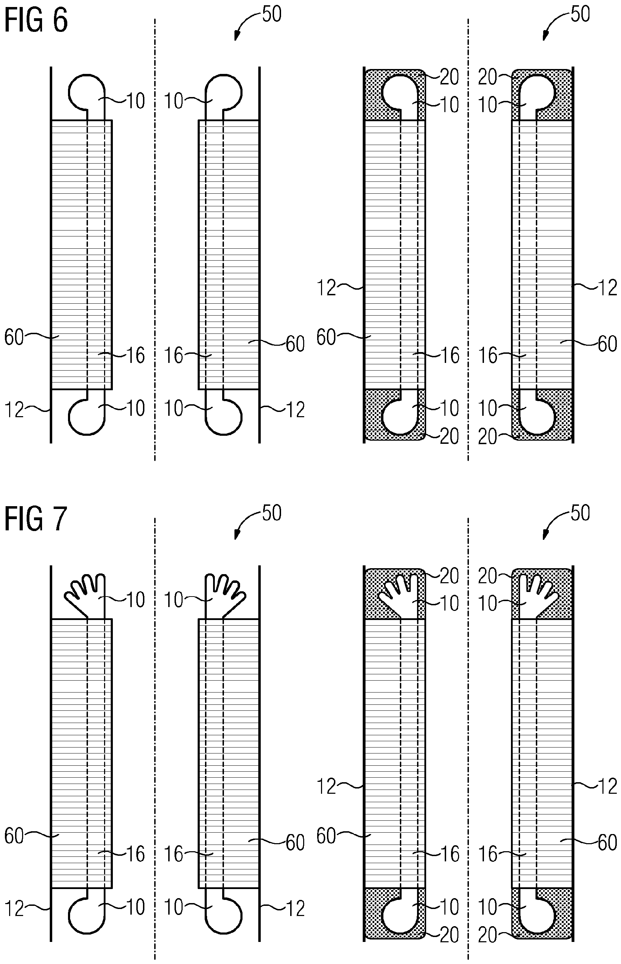

FIG 6 zeigt dieselbe elektrische Maschine 50 wie in FIG 5, allerdings ist in FIG 6 ein schematischer Querschnitt der elektrischen Maschine 50 gezeigt. Zwischen den Wickelköpfen 10 der elektrischen Maschine 50 sind Blechpakete 60 sowie die Nut 16 angeordnet. Die linke Darstellung in FIG 6 zeigt die elektrische Maschine 50 ohne Hartschaumsystem 20. Die rechte Darstellung in FIG 6 zeigt die elektrische Maschine 50 inklusive Hartschaumsystem 20, welches den Wickelkopf 10 sowie den Teil der Nut 16 umschließt, der an den Wickelkopf 10 angrenzt. Zu beachten ist allerdings, dass FIG 6 jeweils nicht vier, sondern nur zwei Wickelköpfe 10 zeigt. Die jeweiligen Darstellungen sind bezüglich der gestrichelten Mittellinie rotationssymmetrisch. Dies ergibt den runden Aufbau, wie er in FIG 5 dargestellt ist.

Im Unterschied zu FIG 6 zeigt die FIG 7 einen Querschnitt der elektrischen Maschine 50, wobei einer der beiden Wickelköpfe 10 aufgefächert beziehungsweise nicht bandagiert ist. Die linke Darstellung in FIG 7 entspricht wie bei FIG 6 dem mittigen Bild aus FIG 5. Die rechte Darstellung entspricht dem rechten Bild in FIG 5. Die rechte Darstellung in FIG 7 zeigt, dass der aufgefächerte Wickelkopf 10 von dem Hartschaumsystem 20 umgegeben ist. Das heißt, die mechanischen Bandagierungen 14 können unnötig werden. Da das Hartschaumsystem 20 den Wickelkopf 10 mechanisch stabilisieren kann, ist der Einsatz von Bandagierungen 14 nicht länger zwingend erforderlich. Dadurch können Fertigungsschritte entfallen und eine zusätzlich bessere Wärmeabfuhr der einzelnen Leiterbündel erzielt werden. Der Wickelkopf 10 weist ohne Bandagierungen 14 in der Regel eine höhere Austauschfläche mit dem Hartschaumsystem auf. Dies kann eine verbesserte Wärmeleitfähigkeit TC begründen.

Die vorliegende Erfindung stellt somit eine Lösung bereit, wie der Wickelkopf thermisch effektiv an das Gehäuse 12 der elektrischen Maschine 50 gekoppelt werden kann. Dabei bleibt das Hartschaumsystem 20 aufgrund der beigemischten nicht-metallischen Partikel 22 elektrisch isolierend. Neben diesen mechanischen beziehungsweise thermischen Vorteilen können sich jedoch auch weitere Vorteile ergeben.

Mit Hilfe des Hartschaumsystems 20 kann die Chemikalien-, Umweltverträglichkeit verbessert werden, da das Hartschaumsystem 20 den Wickelkopf 10 komplett umschließen kann und passivieren kann.

Hinsichtlich eines Explosionsschutzes ergeben sich vorteilhafte Eigenschaften, da weniger freies Volumen vorhanden ist.

Bei einem blockierten Läufer einer elektrischen Maschine 50 kommt es üblicherweise zu einer starken Erhitzung. In diesem Fall kann das Hartschaumsystem 20 eine bessere Wärmeabfuhr bereitstellen, was den Zeitpunkt des Totalausfalls der elektrischen Maschine 50 verzögert. Damit kann in kritischen Zuständen wertvolle Zeit gewonnen werden.

Weitere Gehäusekomponenten wie zum Beispiel das Lagerschild können durch das Hartschaumsystem 20 fixiert werden. Im Idealfall können weitere mechanische Fixierungselemente beispielsweise Schrauben hinfällig werden. Idealerweise können andere Komponenten durch das Hartschaumsystem 20 eingespart beziehungsweise ersetzt werden.

Ein Motor beziehungsweise die elektrische Maschine 50 kann gegenüber Flugstaub, Metallpartikeln oder anderen korrosiven Materialien passiviert werden. Dies bedeutet, dass die elektrische Maschine 50 durch das Hartschaumsystem 20 besser vor schädlichen Außenwirkungen geschützt werden kann.

Im Falle eines Brandfalls bei der elektrischen Maschine 50 kann deren Lebensdauer erhöht werden, weil der Brandgasfluss gehemmt wird. Ein Totalausfall der elektrischen Maschine 50 kann so verzögert werden.

Eventuell auftretende Kondensationserscheinungen an der Wicklung des Wickelkopfes 10 können verringert werden, weil die Kontaktflächen reduziert sind und das Hartschaumsystem 20 die Oberfläche bildet.

Prinzipiell können duroplastische Schaumkunststoffe wie zum Beispiel PU-Schäume, Melanin-Harzschäume, Phenolharzschäume, Harnstoffharzschäume und so weiter zum Einsatz kommen. Das Hartschaumsystem 20 weist trotz der Poren 24 eine gesteigerte thermische Leitfähigkeit zu einem Hartschaumsystem ohne Zusätze auf. Das Hartschaumsystem 20 stellt einen Werkstoff dar, der nach seiner Applikation sein Volumen im Vergleich zu einer Vergussmasse nennenswert vergrößert und somit von selbst Zwischenräume füllen kann. Dabei härtet das Hartschaumsystem 20 zugleich aus und geht in den festen Zustand über. Im Idealfall können bestimmte Fertigungsschritte entfallen, was zu einer Kostenersparnis führen kann. So kann beispielsweise der Prozess des Imprägnierens oder des Bandagierens entfallen. Zugleich sind auch Qualitätsverbesserungen möglich, da der Schäumungsprozess im Vergleich zum Imprägnierprozess auf verschiedene Achshöhen gleichzeitig optimiert werden kann. Die zugesetzten Partikel können in unterschiedlichen Formen beigesetzt sein. Die zugesetzten und beigemischten Partikel weisen dabei idealerweise eine deutlich höhere thermische Leitfähigkeit als Luft auf. Vorzugsweise handelt es sich bei den zugesetzten Partikeln um Feststoffe, welche unterschiedliche Formen annehmen können. So kann beispielsweise Bornitrid dem Hartschaum 26 in verschiedenen Formen beigemischt sein. Das Bornitrid kann in Form von Plättchen, Fasern, Kugeln oder aus einer Mischung verschiedener Formen vorliegen.

## Patentansprüche

1. Verfahren zur Herstellung einer elektrischen Maschine (50) mit einem Wickelkopf (10) und einem Gehäuse (12) durch Ausführen folgender Verfahrensschritte:
a) Bereitstellen eines Hartschaumsystems (20), das einen Hartschaum (26) in einem ersten flüssigen Zustand aufweist, der in einen zweiten festen Zustand überführbar ist, wobei der Hartschaum (26) nicht-metallische Partikel (22) aufweist und das Hartschaumsystem (20) im zweiten Zustand ein größeres Volumen als im ersten Zustand aufweist, wobei die Volumenänderung vom ersten Zustand in den zweiten Zustand wenigstens 5 % beträgt und dem Hartschaum (26) feste nicht-metallische Partikel (22) zugesetzt werden,
b) Einbringen des Hartschaumsystems (20) in einen Bereich zwischen dem Wickelkopf (10) und dem Gehäuse (12) der elektrischen Maschine (50), wobei das Hartschaumsystem (20) vom ersten Zustand in den zweiten Zustand überführt wird und im zweiten Zustand zur Wärmeabfuhr den Wickelkopf (10) mit dem Gehäuse (12) verbindet, wobei dem Hartschaumsystem (20) zur Erhöhung der thermischen Leitfähigkeit metallische Partikel homogen als Zusatz beigemischt werden, wobei die Konzentration der beigemischten metallischen Partikel unterhalb der Perkolationsschwelle liegt.

2. Verfahren nach Anspruch 1, wobei für ein Herstellen des Hartschaums (26) zwei verschiedene Komponenten vermischt werden.

3. Verfahren nach Anspruch 2, wobei vor dem Vermischen der beiden Komponenten des Hartschaums (26) die Partikel beiden Komponenten beigemischt werden.

4. Verfahren nach Anspruch 1, wobei zum Bereitstellen des Hartschaumsystems (20) ein Ein-Komponenten-Hartschaum verwendet wird, der nur eine Komponente aufweist und der Ein-Komponenten-Hartschaum mittels einer chemischen Reaktion und/oder thermischen Behandlung von dem ersten Zustand in den zweiten Zustand überführt wird.

5. Elektrische Maschine (50) mit
- einem Gehäuse (12),
- einem Wickelkopf (10) innerhalb des Gehäuses (12) und
- einem Hartschaumsystem (20), das einen Hartschaum (24) in einem ersten flüssigen Zustand aufweist, der in einen zweiten festen Zustand überführbar ist, , wobei
- das Hartschaumsystem (20) im zweiten Zustand ein größeres Volumen als im ersten Zustand aufweist und die Volumenänderung vom ersten Zustand in den zweiten Zustand wenigstens 5 % beträgt,
- das Hartschaumsystem (20) den Wickelkopf (10) und zugleich das Gehäuse (12) der elektrischen Maschine (50) kontaktiert und
- das Hartschaumsystem (20) elektrisch isolierend ist, **dadurch gekennzeichnet, dass**
- dem Hartschaumsystem (20) feste nicht-metallische Partikel (22) zugesetzt sind, wobei der Hartschaum (26) metallische Partikel aufweist, welche homogen beigemischt sind und die Konzentration der beigemischten metallischen Partikel unterhalb der Perkolationsschwelle liegt.

6. Elektrische Maschine (20) nach Anspruch 5, wobei der Wickelkopf (10) in einzelne Leiterbündel aufgefächert und der Wickelkopf (10) durch das Hartschaumsystem (20) zumindest teilweise umschlossen ist.

7. Elektrische Maschine (50) nach Anspruch 6, wobei die elektrische Maschine (50) ein Blechpaket (60) mit einer Nut (16) aufweist, wodurch ein Leiterbündel geführt ist, und das Hartschaumsystem (20) den Wickelkopf (10) und den an den Wickelkopf (10) angrenzenden Teil der Nut (16) umfasst sowie das Gehäuse (12) der elektrischen Maschine (50) kontaktiert.

8. Elektrische Maschine nach einem der Ansprüche 5-7, wobei die metallischen Partikel jeweils von nicht-metallischen Partikeln (22) umschlossen sind.

## Claims

1. Method for producing an electric machine (50) comprising an end winding (10) and a housing (12) by carrying out the following method steps:
a) providing a rigid foam system (20), which comprises a rigid foam (26) in a liquid first state, which can be converted to a solid second state, wherein the rigid foam (26) comprises non-metallic particles (22) and the rigid foam system (20) has a larger volume in the second state than in the first state, wherein the change in volume from the first state to the second state is at least 5% and solid non-metallic particles (22) are added to the rigid foam (26),
b) introducing the rigid foam system (20) into a region between the end winding (10) and the housing (12) of the electric machine (50), wherein the rigid foam system (20) is converted from the first state to the second state and, in the second state, connects the end winding (10) to the housing (12) for heat dissipation purposes, wherein metallic particles are homogeneously admixed as additive with the rigid foam system (20) to increase the thermal conductivity, wherein the concentration of the admixed metallic particles is below the percolation threshold.

2. Method according to Claim 1, wherein two different components are mixed together to produce the rigid foam (26).

3. Method according to Claim 2, wherein the particles of the two components are admixed before the two components of the rigid foam (26) are mixed together.

4. Method according to Claim 1, wherein a one-component rigid foam comprising only one component is used to provide the rigid foam system (20) and the one-component rigid foam is converted from the first state to the second state by means of a chemical reaction and/or heat treatment.

5. Electric machine (50) having
- a housing (12),
- an end winding (10) inside the housing (12), and
- a rigid foam system (20), which comprises a rigid foam (24) in a liquid first state, which can be converted to a solid second state, wherein
- the rigid foam system (20) has a larger volume in the second state than in the first state and the change in volume from the first state to the second state is at least 50,
- the rigid foam system (20) makes contact with the end winding (10) and at the same time the housing (12) of the electric machine (50) and
- the rigid foam system (20) is electrically insulating, **characterized in that**
- solid non-metallic particles (22) are added to the rigid foam system (20), wherein the rigid foam (26) comprises metallic particles, which are homogeneously admixed and the concentration of the admixed metallic particles is below the percolation threshold.

6. Electric machine (20) according to Claim 5, wherein the end winding (10) is fanned out into individual bundles of conductors and the end winding (10) is at least partially enclosed by the rigid foam system (20).

7. Electric machine (50) according to Claim 6, wherein the electric machine (50) comprises a laminated core (60) with a slot (16), through which a bundle of conductors is guided, and the rigid foam system (20) comprises the end winding (10) and the part of the slot (16) bordering the end winding (10) and makes contact with the housing (12) of the electric machine (50).

8. Electric machine according to one of Claims 5-7, wherein the metallic particles are each enclosed by non-metallic particles (22).

## Revendications

1. Procédé de fabrication d'une machine électrique (50) avec une tête d'enroulement (10) et un boîtier (12) au moyen de l'exécution des étapes de procédé suivantes :
a) préparation d'un système de mousse dure (20) qui présente une mousse dure (26) dans un premier état liquide qui peut être transformé en un deuxième état solide, dans lequel la mousse dure (26) présente des particules non métalliques (22) et le système de mousse dure (20) présente dans le deuxième état un volume plus grand que dans le premier état, dans lequel le changement de volume du premier état au deuxième état est d'au moins 5 % et des particules non métalliques (22) solides sont ajoutées à la mousse dure (26),
b) introduction du système de mousse dure (20) dans une zone entre la tête d'enroulement (10) et le boîtier (12) de la machine électrique (50), dans lequel le système de mousse dure (20) est transféré du premier état au deuxième état et relie, dans le deuxième état, la tête d'enroulement (10) au boîtier (12) pour la dissipation de la chaleur, dans lequel des particules métalliques sont ajoutées de manière homogène comme additif au système de mousse dure (20) pour augmenter la conductivité thermique, dans lequel la concentration des particules métalliques ajoutées est inférieure au seuil de percolation.

2. Procédé selon la revendication 1, dans lequel deux composants différents sont mélangés pour une fabrication de la mousse dure (26) .

3. Procédé selon la revendication 2, dans lequel les particules sont ajoutées aux deux composants avant le mélange des deux composants de la mousse dure (26).

4. Procédé selon la revendication 1, dans lequel, pour la préparation du système de mousse dure (20), une mousse dure mono-composant est utilisée, laquelle ne présente qu'un seul composant, et la mousse dure mono-composant est transformée du premier état au deuxième état au moyen d'une réaction chimique et/ou d'un traitement thermique.

5. Machine électrique (50) avec
- un boîtier (12),
- une tête d'enroulement (10) à l'intérieur du boîtier (12) et
- un système de mousse dure (20), qui présente une mousse dure (24) dans un premier état liquide, qui peut être transformé en un deuxième état solide, dans lequel
- le système de mousse dure (20) présente dans le deuxième état un volume plus élevé que dans le premier état et la variation du volume du premier état au deuxième état est d'au moins 5 %,
- le système de mousse dure (20) est en contact avec la tête d'enroulement (10) et en même temps avec le boîtier (12) de la machine électrique (50) et
- le système de mousse dure (20) est électriquement isolant, **caractérisé en ce que**
- des particules non métalliques (22) solides sont ajoutées au système de mousse dure (20), dans lequel la mousse dure (26) présente des particules métalliques qui sont mélangées de manière homogène et la concentration des particules métalliques mélangées se situe en dessous du seuil de percolation.

6. Machine électrique (20) selon la revendication 5, dans laquelle la tête d'enroulement (10) est divisée en faisceaux de conducteurs individuels et la tête d'enroulement (10) est entourée au moins partiellement par le système de mousse dure (20) .

7. Machine électrique (50) selon la revendication 6, dans laquelle la machine électrique (50) présente un paquet de tôles (60) avec une rainure (16), à travers laquelle un faisceau de conducteurs est guidé, et le système de mousse dure (20) comprend la tête d'enroulement (10) et la partie de la rainure (16) adjacente à la tête d'enroulement (10) et est en contact avec le boîtier (12) de la machine électrique (50).

8. Machine électrique selon l'une des revendications 5 à 7, dans laquelle les particules métalliques sont respectivement entourées de particules non métalliques (22).
